# EUROPÄISCHE PATENTSCHRIFT

(11) **EP 0 576 952 B1**
(45) Veröffentlichungstag und Bekanntmachung des Hinweises auf die Patenterteilung: **09.04.1997**
(21) Anmeldenummer: 93109875.0
(22) Anmeldetag: 21.06.1993
(51) Int. Cl.: C08G 18/08, C08G 18/34, C08G 18/66, C08G 18/42, C09D 175/06, C08G 18/80

(54) **Einbrennlacke aus in Wasser löslichen oder dispergierbaren Polyisocyanatgemischen**
Storing lacquers containing water-soluble or dispersible polyisocyanate compositions
Vernis au four comprenant de compositions de polyisocyanates solubles ou dispersables dans l'eau

(30) Priorität: 03.07.1992 DE 4221924
(43) Veröffentlichungstag der Anmeldung: 05.01.1994
(73) Patentinhaber: BAYER AG, 51368 Leverkusen (DE)
(72) Erfinder: Pedain, Josef, Dr., D-51061 Köln (DE); Müller, Heino, D-51377 Leverkusen (DE); Mager, Dieter, D-51377 Leverkusen (DE); Blum, Harald, Dr., D-47669 Wachtendonk (DE); Casselmann, Holger, Dr., D-51469 Bergisch Gladbach (DE)

(56) Entgegenhaltungen:
- EP-A- 0 022 452
- EP-A- 0 147 674
- DE-A- 2 708 611
- CHEMICAL ABSTRACTS, vol. 110, no. 4, 23. Januar 1989, Columbus, Ohio, US; abstract no. 25078j, 'Water-thinnable polyester-polyurethanes for heat-sensitive adhesives' & JP-A-63 135 447 (DAIICHI KOGYO SEIYAKU) 7. Juni 1988
- CHEMICAL ABSTRACTS, vol. 110, no. 4, 23. Januar 1989, Columbus, Ohio, US; abstract no. 25078j, 'Water-thinnable polyester-polyurethanes for heat-sensitive adhesives' & JP-A-63 135 447

## Beschreibung

Die Erfindung betrifft Einbrennlacke aus in Wasser löslichen oder dispergierbaren, Urethangruppen aufweisenden Polyisocyanatgemischen mit blockierten Isocyanatgruppen einer mittleren Funktionalität von 2,0 bis 2,6 mit in Wasser löslichen oder dispergierbaren Polyhydroxylverbindungen, dessen Bindemittel aus einer Kombination aus (a) einer derartigen Polyhydroxylverbindung auf Basis von ausgewählten Ausgangsmaterialien mit (b) blockierten Polyisocyanaten besteht.

In den letzten Jahren stieg die Bedeutung wäßriger Lacke und Beschichtungsmittel aufgrund immer strengerer Emissionsrichtlinien bezüglich der bei der Lackapplikation freiwerdenden Lösemittel stark an. Obwohl inzwischen bereits für viele Anwendungsbereiche wäßrige Lacksysteme zur Verfügung stehen, können diese das hohe Qualitätsniveau konventioneller, lösemittelhaltiger Lacke hinischtlich Lösemittel- und Chemikalienbeständigkeit oder auch Elastizität und mechanischer Belastbarkeit oftmals noch nicht erreichen. Insbesondere sind bislang noch keine aus wäßriger Phase zu verarbeitende Beschichtungsmittel auf Polyurethanbasis bekannt geworden, die den hohen Forderungen der Praxis an elastische Füller für die Lackierung von Automobilkarosserien bezüglich Schlagzähigkeit, Steinschlagbeständigkeit, sowie Wasser- und Chemikalien-Beständigkeit genügen.

Diese Feststellung gilt sowohl für die GB-PS 1 444 933, die EP-A-0 061 628 und die DE-AS 2 359 613, die sich mit der hydrophilen Modifizierung von aromatischen Polyisocyanaten befassen, als auch für die DE-OS 4 001 783, die sich mit speziellen anionisch modifizierten aliphatischen Polyisocyanaten befaßt, als auch für die Systeme der DE-OS 2 456 469, der DE-OS 2 814 815, der EP-A-0 012 348 und der EP-A-0 424 697, die sich mit wäßrigen Einbrennlackbindemitteln auf Basis von blockierten Polyisocyanaten und organischen Polyhydroxylverbindungen befassen. Auch die Systeme auf Basis von carboxylgruppenhaltigen Polyurethan-Prepolymeren mit verkappten Isocyanatgruppen gemäß DE-OS 2 708 611 bzw. die hochfunktionellen und daher zur Herstellung von elatischen Überzügen weitgehend ungeeigneten, blockierten, wasserlöslichen Urethanprepolymerisate gemäß DE-OS 3 234 590 sind für den genannten Zweck weitgehend unbrauchbar.

Aus der EP-A- 147 674 sind Bindemittel für wäßrige Einbrennlacke bekannt, die ein Polyesterurethan-Prepolymer mit blockierten Isocyanatgruppen und teilweise neutralisierten Carboxylgruppen enthalten.

Wie jetzt gefunden wurde, gelingt die Herstellung von aus wäßriger Phase zu verarbeitenden Einbrennlacken, insbesondere Einbrennfüllern, die den genannten Forderungen der Praxis in optimaler Weise genügen, wenn als Härter für die in Wasser gelöst oder dispergiert vorliegenden Polyhydroxylverbindungen ein Polyisocyanatgemisch der nachstehend näher beschriebenen, erfindungsgemäßen Art verwendet wird. Besonders gute Ergebisse werden dann erzielt, wenn Polyisocyanatgemische der erfindungsgemäßen Art mit ausgewählten, urethanmodifizierten Polyesterharzen der ebenfalls nachstehend näher beschriebenen Art zu aus wäßriger Phase zu verarbeitende Einkomponenten-Bindemittelkombinationen vereinigt werden.

Gegenstand der Erfindung ist ein wäßriger Einbrennlack, dessen Bindemittel aus einer Kombination aus
a) in Wasser löslichen oder dispergierbaren Polyhydroxylverbindungen mit
b) in Wasser löslichen oder dispergierbaren, blockierten Polyisocyanaten
besteht, dadurch gekennzeichnet, daß
die Komponente a) im wesentlichen aus einem urethanmodifizierten Polyesterharz mit einer Säurezahl von 12 bis 30, einer Hydroxylzahl von 30 bis 130 und einem Lösungsmittelgehalt von unter 5,5 Gew.-% besteht und durch Umsetzung von
a1) 81 bis 92 Gew.-% eines Polyesterpolyols mit einer Hydroxylzahl von 80 bis 210 und einer Säurezahl ≤5,
a2) 3 bis 6,5 Gew.-% einer Bis(hydroxymethyl)-alkancarbonsäure,
a3) 0 bis 5 Gew.-% eines niedermolekularen Diols oder Triols des Molekulargewichts 62 bis 150 und
a4) 7 bis 14,5 Gew.-% einer Polyisocyanatkomponente, bestehend zu mindestens 60 % aus einem linearen, aliphatischen Polyisocyanat des Molekulargewichts 168 bis 1 000,
in mindestens 90 %iger, organischer Lösung hergestellt und nach Überführung von mindestens 75 % der Carboxylgruppen in Carboxylatgruppen in Wasser dispergiert worden ist, wobei die unter a1) genannten Polyesterpolyole Kondensationsprodukte von
a1.1) 35 bis 50 mol-% diprimären Diolen des Molekulargewichts 62 bis 150,
a1.2) 1 bis 7 mol-% primär-/sekundären Diolen des Molekulargewichts 76 bis 286,
a1.4) 4 bis 14 mol-% Triole des Molekulargewichts 92 bis 134 und
a1.5) 0 bis 4 Gew.-% Monocarbonsäuren des Molekulargewichts 122 bis 280 sind,
und die Komponente b) aus einem in Wasser löslichen oder disperbierbaren, Urethangruppen aufweisenden Polyisocyanatgemisch mit blockierten Isocyanatgruppen einer mittleren NCO-Funktionalität, bezogen auf die reversibel blockierten Isocyanatgruppen, von 2,0 bis 2,6 besteht, welches das durch zumindest teilweise Neutralisation der eingebauten Carboxylgruppen in die Salzform überführte Umsetzungsprodukt aus
(i) einer Diisocyanat-Komponente bestehend aus mindestens einem organischen Diisocyanat des Molekulargewichtsbereichs 168 bis 300 mit
(ii) einem monofunktionellen Blockierungsmittel für Isocyanatgruppen,
(iii) einer Hydroxycarbonsäure-Komponente, bestehend aus mindestens einer ein- oder zweibasischen Hydroxycarbonsäure,
(iv) 1 bis 15 Gew.-%, bezogen auf das Gewicht der Komponente (i) einer Polyolkomponente, bestehend aus mindestens einem 2- bis 6-wertigen Alkohol des Molekulargewichtsbereichs 62 bis 182 und
(v) 50 bis 500 Gew.-%, bezogen auf das Gewicht der Komponente (i), einer Polyesterdiol-Komponente, bestehend aus mindestens einem Estergruppen enthaltenden Diol des Molekulargewichtsbereichs 350 bis 950
darstellt.

Von erfindungswesentlicher Bedeutung ist die Auswahl der zur Herstellung des erfindungsgemäßen Einbrennlacks eingesetzten Ausgangsmaterialien in qualitativer und quantitativer Hinsicht, wobei genau definierte Mischungsverhältnisse von polyfunktionellen und difunktionellen Bestandteilen und die Verwendung von estergruppenhaltigen Diolen (v) mit einem genau definierten Molekulargewicht besonders zu beachten sind. Die erfindungsgemäße Auswahl ermöglicht die Herstellung von Beschichtungsmitteln bzw. von aus diesen Beschichtungsmitteln hergestellten Beschichtungen mit an sich gegensätzlichen Eigenschaften, nämlich hohe Stabilität der in Wasser gelöst bzw. dispergiert vorliegenden Beschichtungsmittel, insbesondere gute Verträglichkeit der Einzelkomponenten mit sich selbst und Wasser einerseits und hohe Wasserbeständigkeit der letztendlich erhaltenen Beschichtung andererseits, sowie hohe Elastizität der Beschichtung (Schlagfestigkeit) bei gleichzeitig vorliegender hohen Vernetzungsdichte (Lösungsmittelresistenz).

Die Diisocyanatkomponente (i) besteht aus mindestens einem organischen Diisocyanat des Molekulargewichtsbereichs 168 bis 300. In Betracht kommen sowohl aromatische als auch (cyclo)aliphatische Diisocyanate wie 1,6-Diisocyanatohexan, 2,4- und/oder 2,6-Diisocyanatotoluol, 4,4'-Diisocyanatodiphenylmethan, 4,4'-Diisocyanatotoluol, 4,4'-Diisocyanatodiphenylmethan, 4,4'-Diisocyanato-dicyclohexylmethan oder 1-Isocyanate-3,3,5-trimethyl-5-isocyanatomethyl-cyclohexan (IPDI). Grundsätzlich möglich ist auch die Verwendung von Gemischen derartiger Diisocyanate.

Als Blockierungsmittel (ii) werden die bekannten monofunktionellen Blockierungsmittel eingesetzt, wie z.B. ε-Caprolactam, Malonsäurediethylester, Acetessigsäureethylester oder Oxime wie Butanonoxim. Butanonoxim ist das bevorzugte Blockierungsmittel.

Als Hydroxycarbonsäuren (iii) kommen einbasische und zweibasische in Frage, wie z.B. 2-Hydroxyessigsäure, 3-Hydroxypropansäure und 12-Hydroxy-9-octadecansäure (Rizinolsäure). Bevorzugte Carbonsäuren sind solche, bei denen die Carboxylgruppe aufgrund sterischer Effekte in ihrer Reaktivität gehindert ist. Besonders bevorzugt sind die 3-Hydroxy-2,2-dimethylpropansäure (Hydroxypivalinsäure) und die Dimethylolpropionsäure.

Als Polyolkomponente (iv) kommen 2- bis 6-wertige, estergruppenfreie Alkohole des Molekulargewichtsbereichs 62 bis 182 bzw. Gemische derartiger Alkohole in Betracht. Typische Beispiele sind Ethandiol-1,2, Propandiol-1,2 und -1,3, Butandiol-1,4, -1,2 oder -2,3, Hexandiol-1,6, 1,4-Dihydroxycyclohexan, Glycerin, Trimethylolethan, Trimethylolpropan, Pentaerythrit und Sorbit.

Die Polyesterdiol-Komponente (v) besteht aus mindestens einem Estergruppen enthaltenden Diol des Molekulargewichtsbereichs 350 bis 950. Es handelt sich hierbei um das mittlere, aus der Hydroxylzahl berechenbare Molekulargewicht. Im allgemeinen handelt es sich bei den Esterdiolen um Gemische, in denen in untergeordneten Mengen auch einzelne Bestandteile vorliegen können, die ein unter- oder oberhalb dieser Grenzen liegendes Molekulargewicht aufweisen. Es handelt sich um die an sich bekannten Polyesterdiole, die aus Diolen und Dicarbonsäuren aufgebaut sind. Geeignete Diole sind beispielsweise 1,4-Dimethylol-cyclohexan oder die oben bei der Beschreibung der Komponente (iv) genannten Diole bzw. Gemische derartiger Diole. Geeignete Dicarbonsäuren sind beispielsweise aromatische Dicarbonsäuren wie Phthalsäure, Isophthalsäure und Terephthalsäure, cycloalipahtische Dicarbonsäuren wie Hexahydrophthalsäure, Tetrahydrophthalsäure, Endomethylentetrahydrophthalsäure bzw. deren Anhydride und aliphatische Dicarbonsäuren, die bevorzugt Verwendung finden, wie Bernsteinsäure, Glutarsäure, Adipinsäure, Korksäure, Azelainsäure und Sebacinsäure oder deren Anhydride. Polyesterdiole auf Basis von Adipinsäure werden bevorzugt als Komponente (v) bzw. als Teil der Komponente (v) verwendet.

Besonders bevorzugt werden jedoch Polycaprolactondiole des genannten Molekulargewichtsbereichs eingesetzt, die in an sich bekannter Weise aus einem Diol oder Diolgemisch der oben beispielhaft genannten Art als Starter und ε-Caprolacton hergestellt worden sind. Das bevorzugte Startermolekül ist hierbei Hexandiol-1,6. Ganz besonders bevorzugt sind solche Polycaprolactondiole, die durch Polymerisation von ε-Caprolacton unter Verwendung von Hexandiol-1,6 als Starter hergestellt worden sind und eine sehr enge Oligomerenverteilung aufweisen, was durch Verwendung von Bortrifluorid-Etherat oder organischen Zinnverbindungen als Katalysator bei der Polyermisierung erreicht werden kann. Diese ganz besonders bevorzugten Esterdiole bestehen zu mehr als 50 Gew.-% aus Molekülen des Molekulargewichtsbereichs von 460 bis 802.

Zur Herstellung des erfindungsgemäßen Einbrennlacks werden im allgemeinen die einzusetzenden Ausgangskomponenten (iii) bis (v) miteinander vermischt und die Mischung mit der Diisocyanatkomponente (i) zur Reaktion gebracht, wobei gegebenenfalls eine geringe Menge eines geeigneten inerten Lösungsmittels mitverwendet werden kann. Die Temperatur der Reaktionsmischung wird bei 0°C bis 120°C, bevorzugt bei 20°C bis 60°C, gehalten, wenn aromatische Diisocyanate verwendet werden, und auf 80 bis 110°C, wenn (cyclo)aliphatische Diisocyanate zum Einsatz kommen. Anschließend wird das Blockierungsmittel zudosiert. Die Temperatur sollte auch hier während der Umsetzung 120°C nicht übersteigen. Bei dieser Art der Herstellung der erfindungsgemäßen Polyisocyanatgemische werden Art und Mengenverhältnisse der Ausgangskomponenten (i) einerseits und (iii) bis (v) andererseits im Rahmen der gemachten Offenbarung so gewählt, daß ein NCO-Überschuß verbleibt, der dann mit den Blockierungsmitteln zur Reaktion gebracht wird. Bei dieser Art der Herstellung wird das Blockierungsmittel im allgemeinen in einem geringen (bis zu 1,1-molaren) Überschuß, bezogen auf die freien Isocyanatgruppen eingesetzt, die nach der Umsetzung der Diisocyanatkomponente (i) mit den Hydroxylgruppen der Komponenten (iii) bis (v) noch vorliegen bzw. nach Beendigung dieser Umsetzung theoretisch noch zu erwarten sind.

Die genannte Reihenfolge der Umsetzungen kann auch verändert werden, wobei besonders die Hydroxycarbonsäure (iii) auch ganz zuletzt umgesetzt werden kann, unter möglichst milden Bedingungen, um zu verhindern, daß auch die Carboxylgruppen mit den NCO-Gruppen zur Reaktion kommen.

Hierbei werden Art und Mengenverhältnisse der Reaktanten vorzugsweise so gewählt, daß für jede Hydroxylgruppe der Komponente (iii) mindestens eine NCO-Gruppe des intermediär gebildeten Zwischenprodukts zur Verfügung steht. Hierbei handelt es sich allerdings nicht um eine zwingend einzuhaltende Verfahrensvorschrift, da, zumindest theoretisch, auch eine Arbeitsweise denkbar ist, bei welcher als Komponente (iii) eine Polyhydroxycarbonsäure eingesetzt, jedoch nicht über alle vorliegenden Hydroxylgruppen mit dem Polyisocyanat verknüpft wird. Im Extremfall würde es daher genügen, wenn für jedes Mol an Polyhydroxycarbonsäure (iii) mindestens 1 mol Isocyanatgruppen zur Verfügung steht.

Die Umsetzungen können lösemittelfrei oder wie bereits erwähnt in einem inerten Lösemittel durchgeführt werden, das gegebenenfalls nach der Umsetzung, Neutralisation und Aufnahme in Wasser durch Destillation entfernt werden kann. Als Lösemittel kommen solche in Frage, die gegenüber NCO-Gruppen nicht reaktiv sind. Beispielhaft genannt seien Ketone wie Aceton und Methylethylketon, Ester wie Ethylacetat aber auch Lösemittel wie N-Methylpyrrolidon, die unter Umständen auch in kleinen Anteilen als Verlaufmittel in dem Überzugsmittel verbleiben kan. Die im Überzugsmittel verbleibenden Lösungsmittel werden, falls überhaupt, in Mengen von bis zu 20 Gew.-%, bezogen auf das Gewicht der Ausgangsmaterialien (i) bis (v) eingesetzt.

Nach beendeter Umsetzung werden vor der Zugabe von Wasser mit einem Neutralisationsmittel die vorhandenen COOH-Gruppen zumindest teilweise neutralisiert. Zum Neutralisieren benutzt man Alkali- oder Erdalkalihydroxide, bevorzugt aber tertiäre Amine wie beispielsweise Triethylamin oder, besonders bevorzugt, N,N-Dimethylethanolamin.

Erfindungswesentlich ist weiterhin, daß Art und Mengenverhältnissse der eingesetzten Ausgangsmaterialien so gewählt werden, daß letztendlich in Wasser lösliche oder dispergierbare, urethanmodifizierte Polyisocyanatgemische erhalten werden, die im statistischen Mittel pro Molekül 2,0 bis 2,6 blockierte Isocyanatgruppen aufweisen, was einem Geahlt an blockierten Isocyanatgruppen (berechnet als NCO) von ca. 2 bis 8 Gew.-% entspricht.

Die Bedingung der Dispergierbarkeit bzw. Löslichkeit in Wasser wird im allgemeinen dann erfüllt, wenn Art und Menge der eingesetzten Hydroxycarabonsäure-Komponente (iii), sowie der Neutralisationsgrad der eingebauten Carboxylgruppen so bemessen werden, daß die Polyisocyanatgemische einen Gehalt an Carboxylatgruppen von 15 bis 120, vorzugsweise 25 bis 75, Milliäquivalenten pro 100 g Feststoff aufweisen.

Außerdem werden im allgemeinen bei dere Herstellung der erfindungsgemäßen Polyisocyanatgemische die Polyole (iv) in einer Menge von 1 bis 15, vorzugsweise 2 bis 8 Gew.-%, bezogen auf das Gewicht der Diisocyanate (i) eingesetzt.

Die Menge der bei dere Herstellung der erfindungsgemäßen Polyisocyanatgemische verwendeten Esterdiolkomponente (v) liegt im allgemeinen bei 50 bis 500, vorzugsweise 60 bis 300 Gew.-%, bezogen auf das Gewicht der Diisocyanatkomponente (i).

Nach erfolgter Neutralisation werden die erfindungsgemäßen Polyisocyanatgemische im allgmeinen durch Wasserzugabe in 20- bis 50 gew.-%ige wäßrige Dispersionen oder Lösungen überführt. Die Herstellung derartiger Dispersionen oder Lösungen wäre natürlich auch beispielsweise durch Verrühren eines unneutralisierten Umsetzungsprodukts der genannten Ausgangsmaterialien bzw. einer Lösung eines derartigen Umsetzungsprodukts in einem mit Wasser mischbaren Lösungsmittel der beispielhaft genannten Art mit einer wäßrigen Lösung des eingesetzten Neutralisationsmittels möglich. Im allgemeinen erhält man stets feinteilige, praktisch durchsichtige Dispersionen bzw. Lösungen der erfindungsgemäßen Polyisocyanatgemische. Im Falle der Mitverwendung von Lösungsmitteln der beispielhaft genannten Art können diese aus der erhaltenen wäßrigen Phase beispielsweise unter vermindertem Druck bei erhöhter Temperatur entfernt werden. Kleine Mengen gewisser Lösungsmittel können jedoch, wie bereits ausgeführt, auch in der Dispersion bzw. Lösung verbleiben.

Bei der erfindungsgemäßen Verwendung der erfindungsgemäßen Polyisocyanatgemische werden diese in Form der beschriebenen wäßrigen Lösungen oder Dispersionen mit wäßrigen Lösungen oder Dispersionen von organischen Polyhydroxylverbindungen zu lagerstabilen, wäßrigen Einkomponenten-Bindemitteln kombiniert. In diesen Bindemittelkombinationen liegen somit a) organische Polyhydroxylverbindungen in in Wasser gelöster oder dispergierter Form und b) erfindungsgemäße Polyisocyanatgemische in in Wasser gelöster oder dispergierter Form vor.

Das Mischungsverhältnis der beiden Komponenten a) und b) wird im allgemeinen so gewählt, daß das Äquivalentverhältnis von blockierten Isocyanatgruppen zu Hydroxylgruppen bei 0,5:1 bis 1,5:1, vorzugsweise 0,7:1 bis 1,1:1, liegt.

Bei der Bindemittelkomponente a) handelt es sich beispielsweise um in Wasser lösliche oder dispergierbare Polyhydroxylverbindungen eines aus Hydroxylgruppengehalt und Hydroxylfunktionalität berechenbaren mittleren Molekulargewichts 1 000 bis 100 000, vorzugsweise 2 000 bis 10 000, der an sich aus der Chemie der Polyurethanlacke bekannten Art, vorausgesetzt die Polyhydroxylverbindungen weisen einen für ihre Löslichkeit bzw. Dispergierbarkeit in Wasser ausreichenden Gehalt an hydrophilen Gruppierungen, insbesondere Ethylenoxideinheiten aufweisenden Polyetherketten und/oder Carboxylatgruppen auf. Grundsätzlich möglich ist allerdings auch die Verwendung von für sich allein nicht ausreichend hydrophilen Polyhydroxylverbindungen in Abmischung mit externen Emulgatoren.

Als Komponente a) in Betracht kommen Polyhydroxypolyester, Polyhydroxypolyether oder Hydroxylgruppen aufweisende Polymerisate, d.h. die an sich bekannten Polyhydroxypolyacrylate. Die Verbindungen weisen im allgemeinen eine Hydroxylzahl von 20 bis 200 auf, vorzugsweise von 50 bis 130, bezogen auf 100 %ige Produkte.

Bei den Polyhydroxylpolyacrylaten handelt es sich um an sich bekannte Mischpolymerisate von Styrol mit einfachen Estern der Acrylsäure und/oder Methacrylsäure, wobei zwecks Einführung der Hydroxylgruppen Hydroxyalkylester, wie beispielsweise die 2-Hydroxyethyl-, 2-Hydroxypropyl-, 2-, 3- oder 4-Hydroxybutylester dieser Säuren mitverwendet werden.

Geeignete Polyetherpolyole sind die aus der Polyurethanchemie an sich bekannten Ethoxylierungs- und/oder Propoxylierungsprodukte geeigneter 2- bis 4-wertiger Startermoleküle wie z.B. Wasser, Ethylenglykol, Propandiol, Trimethylolpropan, Glycerin und/oder Pentaerythrit.

Beispiele geeigneter Poylesterpolyole sind insbesondere die in der Polyurethanchemie an sich bekannten Umsetzungsprodukte von mehrwertigen Alkoholen, beispielsweise von Alkanpolyolen der soeben beispielhaft genannten Art mit überschüssigen Mengen Polycarbonsäuren bzw. Polycarbonsäureanhydriden, insbesondere Dicarbonsäuren bzw. Dicarbonsäureanhydriden. Geeignete Polycarbonsäuren bzw. Polycarbonsäureanhydride sind beispielsweise Adipinsäure, Phthalsäure, Isophthalsäure, Phthalsäureanhydrid, Tetrahydrophthalsäureanhydrid, Hexahydrophthalsäureanhydrid, Maleinsäure, Maleinsäureanhydrid, deren Diels-Alder-Addukte mit Cyclopentadien, Fumarsäure oder dimere bzw. trimere Fettsäuren. Bei der Herstellung der Polyesterpolyole können selbstverständlich beliebige Gemische der beispielhft genannten mehrwertigen Alkohole oder beliebige Gemische der beispielhaft genannten Säuren bzw. Säureanhydride eingesetzt werden.

Die Herstellung der Polyesterpolyole erfolgt nach bekannten Methoden, wie sie z.B. in Houben-Weyl, Methoden der organischen Chemie, Band XIV/2, G. Thieme-Verlag, Stuttgart, 1963, Seiten 1 bis 47, beschrieben sind.

Die gegebenenfalls erforderliche hydrophile Modifizierung dieser Polyhydroxylverbindungen erfolgt nach an sich bekannten Methoden, wie sie beispielsweise in EP-B-0 157 291 oder EP-A-0 427 028 offenbart sind. Die in diesen Vorveröffentlichungen beschriebenen, in Wasser löslichen bzw. dispergierbaren, urethanmodifizierten Polyester sind erfindungsgemäß als Komponente a) besonders gut geeignet. Ebenfalls geeignet, jedoch weniger bevorzugt sind die in DE-OS 38 29 587 beschriebenen, in Wasser löslichen oder dispergierbaren Hydroxylgruppen aufweisenden Polyacrylate.

Besonders bevorzugt als Komponente a) kommen urethanmodifizierte Polyesterharze in Betracht, die Säurezahlen von 12 bis 30 mg KOH/g, Hydroxylzahlen von 30 bis 130 mg KOH/g und einen Gehalt an Lösungsmitteln von maximal 5,5 Gew.-% aufweisen und durch Umsetzung der vorstehend genannten Ausgangsmaterialien a1) bis a4) hergestellt worden sind.

Die Angaben bezüglich der Säurezahlen umfassen sowohl hier als auch nachstehend sowohl die freien Carboxylgruppen als auch die durch Neutralisation in Carboxylatgruppen überführten Carboxylgruppen.

Besonders bevorzugte derartiger Lösungen bzw. Dispersionen von urethanmodifizierten Polyesterharzen sind solche, die Säurezahlen von 12 bis 26 und Hydroxylzahlen von 30 bis 130 aufweisen, ohne Destallationsschritt maximal 3,5 % organische Lösemittel enthalten und durch Umsetzung von
a1) 83 bis 89 Gew.-% eines Polyesterpolyols mit einer Hydroxylzahl von 95 bis 185 und einer Säurezahl ≤3,5,
a2) 3,2 bis 4,8 Gew.-% einer Bis(hydroxymethyl)alkancarbonsäure,
a3) 0 bis 3 Gew.-% eines niedermolekularen Diols des Molekulargewichts 62 bis 150 und
a4) 8,5 bis 13 Gew.-% einer Diisocyanatkomponente, bestehend zu mindestens 80 % aus einem linearen, aliphatischen Diisocyanat des Molekulargewichts 168 bis 300,
in mindestens 94 %iger, organischer Lösung hergestellt und nach Überführung von mindestens 75 % der Carboxylgruppe in Carboxylatgruppen in Wasser dispergiert bzw. gelöst worden sind, wobei die unter a1) genannten Polyesterpolyole Kondensationsprodukte von
a1.1) 39 bis 46 mol-% diprimären Diolen des Molekulargewichts 62 bis 150,
a1.2) 1,2 bis 5 mol-% primär-/sekundären Diolen des Molekulargewichts 76 bis 286,
a1.3) 38 bis 48 Gew.-% Dicarbonsäuren des Molekulargewichts 98 bis 560,
a1.4) 5 bis 12,5 mol-% Triole des Molekulargewichts 92 bis 143 und
a1.5) 0 bis 1,9 mol-% Monocarbonsäuren des Molekulargewichts 122 bis 280 sind.

Die Herstellung der Polyesterharze a1) erfolgt durch eine an sich bekannte Umsetzung der genannten Ausgangsmaterialien, vorzugsweise nach dem Prinzip der Schmelzkondensation, gegebenenfalls unter Anlegen eines Vakuums, bei Temperaturen von 140 bis 220°C unter Wasserabspaltung.

Bei der Ausgangskomponente a1.1) handelt es sich um diprimäre Diole des Molekulargewichts 62 bis 150. Geeignet sind z.B. Ethylenglykol, 1,6-hexandiol, 1,4-Butandiol, Neopentylglykol, 1,4-Cyclohexandimethanol, 1,8-Octandiol, Diethylenglykol oder Gemische dieser und auch anderer diprimärer Diole.

Bei der Ausgangskomponente a1.2) handelt es sich um primär-/sekundäre Diole des Molekulargewichts 76 bis 286. Geeignet sind z.B. 1,2-Propylenglykol, 1,3-Butandiol, 1,2-Octandiol, 1,2-Octadecandiol und Gemische dieser und auch anderer primär-/sekundärer Diole.

Bei der Ausgangskomponente a1.3) handelt es sich um Dicarbonsäuren (Anhydride) des Molekulargewichts 98 bis 600. Geeignet sind z.B. Maleinsäure(anhydrid), Phthalsäureanhydrid, Isophthalsäure, HexahydraphLhalsäureanhydrid, Tetrahydrophthalsaureanhydrid, Adipinsäure, Bernsteinsäure, Sebacinsäure, Dimerfettsäure oder Gemische dieser und auch anderer Dicarbonsäuren.

Bei der Ausgangskomponente a1.4) handelt es sich um Triole des Molekulargewichts 92 bis 134. Geeignet sind z.B. Glycerin, 1,1,1-Trimethylolpropan, 1,2,6-Hexantriol, 1,1,1-Trimethylolethan oder Gemische dieser und auch anderer Triole.

Bei der Ausgangskomponente a1.5) handelt es sich um Monocarbonsäuren des Molekulargewichts 122 bis 280. Geeignet sind z.B. 2-Ethylhexansäure, Isononansäure, Octadecansäure, Sojaölfettsäure, Benzoesäure oder Gemische dieser und auch anderer Monocarbonsäuren.

Bei der Komponente a2) handelt es sich um mindestens eine Bis(hydroxymethyl)alkancarbonsäure, vorzugsweise um Dimethylolpropionsäure.

Bei der Komponente a3) handelt es sich um niedermolekulare Diole bzw. Triole des Molekulargewichts 62 bis 150. Geeignet sind z.B. Ethylenglykol, Propylenglykol, Hexandiol, Neopentylglykol, Trimethylolpropan, 1,4-Cyclohexandimethanol und Gemische dieser und auch anderer Diole/Triole.

Bei der Komponente a4) handelt es sich um mindestens ein organisches Polyisocyanat des Molekulargwichtsbereichs 168 bis 1 000. Besonders bevorzugt handelt es sich hierbei um (cyclo)aliphatische Diisocyanate des Molekulargewichtsbereichs 168 bis 300, wie sie auch als Ausgangskomponente (i) zur Herstellung der erfindungsgemäßen Polyisocyanatgemische in Betracht kommen und bereits oben beispielhaft offenbart sind. Weiterhin in Betracht kommen beliebige andere organische Polyisocyanate der Polyurethanchemie, insbesondere Lackpolyisocyanate auf Basis der genannten (cyclo)aliphatischen Diisocyanate oder auch auf Basis von aromatischen Diisocyanaten wie 2,4- und/oder 2,6-Diisocyanatotoluol oder 4,4'-Diisocyanatodiphenylmethan. Unter "Lackpolyisocyanaten" sind hierbei insbesondere die Urethan-, Allophanat-, Isocyanurat-, Uretdion- und/oder Biuretgruppen aufweisende Modifizierungsprodukte der beispielhaft genannten einfachen Diisocyanate zu verstehen.

Die Herstellung der erfindungsgemäß besonders bevorzugt als Polyolkomponente a) einzusetzenden, urethanmodifizierten Polyesterharze a) aus den Ausgangsmaterialien a1) bis a4) erfolgt derart, daß Polyester a1), die Bis(hydroxymethyl)alkancarbonsäure a2), Komponente a3) und das gegebenenfalls mitverwendete Lösemittel homogenisiert wurden, bei 50 bis 130°C die Diisocyanatkomponente a4) zugegeben wird und das Reaktionsgemisch so lange gerührt wird, bis keine NCO-Gruppen mehr vorhanden sind. Diese Reaktion wird in Gegenwart von 0,005 bis 1 Gew.-% geeigneten Katalysatoren durchgeführt, wie z.B. Triethylamin, Dibutylzinnoxid oder Dibutylzinndilaurat. Die Umsetzung erfolgt in mindestens 90 %iger, vorzugsweise 94 %iger, organischer Lösung, Geeignete Lösemittel sind z.B. N-Methylpyrrolidon, N-Methylcaprolactam, Dimethyldiglykol.

Nach Zugabe geeigneter Neutralisationsmittel für mindestens 75, vorzugsweise mindestens 95 % der Carboxylgruppen, werden die Bindemittel in Wasser dispergiert bzw. gelöst. Die Neutralisation kann auch, den oben gemachten Ausführungen entsprechen, gleichzeitig mit dem Dispergier- bzw. Löseschritt erfolgen. Geeignete Neutralisationsmittel sind Triethylamin, Dimethylaminoethanol, Triethanolamin, Methyldiethanolamin, Diisopropanolamin, N-Methylmorpholin, 2-Amino-2-methyl-1-propanol, Ammoniak oder andere gebräuchliche Neutralisationsmittel bzw. Neutralisationsmittelgemische.

Die als Komponente a) besonders bevorzugten, aus den Ausgangsmaterialien a1) bis a4) hergestellten urethanmodifizierten Polyesterharze weisen im allgemeinen einen Gehalt an Carboxylatgruppen von 20 bis 55 Milliäquivalenten pro 100 g Feststoff auf.

Zur Herstellung der gebrauchsfertigen Beschichtungsmittel werden die wäßrigen Lösungen bzw. Dispersionen der Komponenten a) und b) den oben gemachten Ausführungen entsprechend miteinander vermischt. Die so erhaltenen Einkomponenten-Bindemittel sind im allgemeinen beliebig lange lagerfähig. Gegebenenfalls mitzuverwendende Hilfs- und Zusatzmittel der Beschichtungstechnologie wie beispielsweise Pigmente, Verlaufsmittel, blasenverhindernde Zusatzmittel, Katalysatoren und dgl. können dem wäßrigen Gemisch der Bindemittelkomponenten a) und b) oder den wäßrigen Lösungen bzw. Dispersionen der Ausgangskomponenten a) und/oder b) vor deren Vermischung zugesetzt werden.

Die Einkomponenten-Beschichtungsmittel können nach allen beliebigen Methoden der Beschichtungstechnologie wie Spritzen, Streichen, Tauchen, Fluten oder mit Hilfe von Walzen und Rakeln auf beliebige hitzeresistente Substrate ein- oder mehrschichtig aufgetragen werden.

Man erhält beispielsweise Überzüge auf Metall, Kunststoff, Holz oder Glas durch Aushärten des Lackfilmes bei 80 bis 220°C, vorzugsweise bei 130 bis 180°C.

Die erfindungsgemäßen Einbrennlacke eignen sich vorzugsweise zur Herstellung von Überzügen und Lackierungen auf Stahlblechen wie sie beispielsweise zur Herstellung von Fahrzeugkarosserien, Maschinen, Verkleidungen, Fässern oder Containern Verwendung finden. Sie werden bevorzugt verwendet für die Herstellung von Automobilfüllern. Die Lackfilme haben im allgemeinen eine Trockenschichtdicke von 0,01 bis 0,3 mm.

Die erfindungsgemäßen Einbrennlacke ergeben einen langanhaltenden Oberflächenschutz, wie in den Beispielen demonstriert wird. Besonders die hohe Schlagfestigkeit ist hervorzuheben, was die Bindemittel für Anwendungen bei denen ein guter Steinschlagschutz erforderlich ist, in hervorragender Weise geeignet macht.

Der besondere Vorteil der wäßrigen Bindemittel, die zu den erfindungsgemäßen Einbrennlacken führen, ist ihre hohe Stabilität bei Lagerung sowohl bei Raumtemperatur als auch bei leicht erhöhter Temperatur von 30 bis 60°C.

In den nachfolgenden Beispielen beziehen sich alle Prozentangaben, falls nicht anderslautendes vermerkt, auf das Gewicht.

### Beispiele

### Beispiel 1 (Herstellung eines Estergruppen enthaltenden Diols (v))

In einem mit Stickstoff gespülten 100 l Kessel werden 57,3 kg ε-Caprolacton, 12,7 kg Hexandiol-1,6 und 3,5 kg Zinn-II-octoat miteinander vermischt und auf 160°C erhitzt. Nach 4 Stunden bei 160°C ist die Reaktion beendet. Nach Abkühlen wird der Ansatz (70 kg) abgelassen, das Produkt ist bei Raumtemperatur flüssig.

Daten des Diols:

| | |
|---|---|
| Viskosität (25°C): | 330 mPa^{o}s |
| OHZ: | 172,4 |
| SZ: | 0,6 |
| Farbzahl (HAZEN) nach DIN 53 409: | 30 |
| Mittleres Molgewicht (aus OHZ ber.): | 650 |

Eine Analyse mittels Gelchromatographie ergibt folgende Oligomerenverteilung des Polyesters:

| Oligomer (Molgewicht) | experimentell (Flächen-% = Gewichts-%) |
|---|---|
| 118 | 0,15 |
| 232 | 1,75 |
| 246 | 5,76 |
| 460 | 11,44 |
| 574 | 15,92 |
| 688 | 19,19 |
| 802 | 15,62 |
| 916 | 12,08 |
| 1030 | 8,15 |
| 1144 | 5,25 |
| >1144 | 4,69 |

- Ergebnis:: Mehr als 50 Gew.-% der im Polyester enthaltenen Moleküle liegen in einem Molgewichtsbereich von 460 bis 802.

### Beispiel 2 (Herstellung eines Polyisocyanatgemisches b))

Ansatzmengen:

| | |
|---|---|
| 86,0 g | Esterdiol aus Beispiel 1 |
| 14,7 g | Dimethylolpropionsäure (DMPS) |
| 4,5 g | Trimethylolpropan |
| 5,9 g | Hexandiol-1,6 |
| 131,0 g | 4,4'-Dicyclohexylmethandiisocyanat |
| 34,8 g | Butanonoxim |
| 9,8 g | Dimethylaminoethanol (DMAE) |
| 41,6 g | N-Methylpyrrolidon (NMP) |
| 462,0 g | entionisiertes Wasser |

Durchführung:
Die Mischung aus den Polyolen, DMPS und NMP wird bei ca. 50°C mit dem Diisocyanat verrührt und innerhalb 1 Stunde auf 100°C aufgeheizt. Nach ca. 5 Stunden ist ein NCO-Gehalt von 4,5 % (theoretischer Wert 4,6) erreicht. Anschließend wird das Oxim so zudosiert, daß bei der exothermen Reaktion eine Temperatur von 110°C nicht überschritten wird. Während einer Nachrührzeit von 15 Minuten wird auf 90 bis 95°C abgekühlt, das DMAE zugegeben und nach weiteren 5 Minuten innerhalb von 15 Minuten mit dem ca. 80°C warmen Wasser dispergiert.

Man erhält eine fast klare Lösung mit einem Festkörper von 35 %, einem blockierten NCO-Gehalt von 1,6 % und einer Viskosität von 5 000 mPa^{o}s/23°C. Das Produkt hat eine NCO(blockiert)-Funktionalität von ca. 2,23.

### Beispiel 3 (urethanmodifiziertes Polyesterharz)

In ein 15 l Reaktionsgefäß mit Rühr-, Kühl-, Heizvorrichtung und Wasserabscheider werden 267 g (3,1 mol-%) 1,2-Propylenglykol, 5 080 g (43,6 mol-%) Neopentylglykol, 1 419 g (9,5 mol-%) Trimethylolpropan, 3 093 g (18 mol-%) Phthalsäureanhydrid und 4 101 g (25,1 mol-%) Isophthalsäure eingewogen, auf 220°C aufgeheizt und unter Wasserabspaltung so lange kondensiert, bis die Säurezahl = 3 ist.

8 450 g dieses Polyesters, 398 g Dimethylolpropionsäure und 100 g Neopentylglykol werden in 780 g N-Methylpyrrolidon gelöst, mit 10 g Dibutylzinndilaurat als Katalysator versetzt und auf 75°C erwärmt. Nach Zugabe von 1 150 g Hexamethylendiisocyanat wird unter Ausnutzung der Exothermie auf 125°C erhitzt. Es wird so lange gerührt, bis im Reaktionsgemisch keine NCO-Gruppen mehr nachweisbar sind. Anschließend werden 268 g Dimethylethanolamin zugegeben und das Produkt in 11 270 g Wasser dispergiert.

Man erhält eine etwa 45 %ige Harzdispersion mit ca. 3,5 % organischem Lösemittel. Der Gehalt an organisch gebundenen Hydroxylgruppen beträgt 1,5 % (bezogen auf Dispersion).

### Beispiel 4 (urethanmodifiziertes Polyesterharz)

In einem 10 1-Rührkessel mit Rühr-, Kühl-, Heizvorrichtung und Wasserabscheider werden 125 g 1,2-Butandiol. 1 889 g Neopenylglykol, 562 g Trimethylolproapn, 812 g Isophthalsäure, 616 g Maleinsäureanhydrid und 1 034 g Phthalsäureanhydrid auf 220°C erhitzt und so lange Wasser abgespalten, bis die Säurezahl = 3 ist.

850 g dieses Polyesters, 40 g Dimethylolpropionsäure und 0,7 g Dibutylzinnoxid werden in 60 g N-Methylpyrrolidon gelöst und bei 80°C mit einem Gemisch aus 95 g Hexamethylendiisocyanat und 10 g eines Trimerisats auf Hexamethylendiisocyanat (®Desmodur N 300, BAYER AG) derart umgesetzt, daß keine freien NCO-Gruppen mehr nachweisbar sind. Nach Zugabe von 23,8 g Methyldiethanolamin wird das Produkt in 1 130 g Wasser dispergiert. Man erhält eine etwa 45 %ige Harzdispersion mit einem Gehalt an organischen Lösemitteln von ca. 2,7 % und einem Hydroxylgruppengehalt von 1,7 % (bezogen auf Dispersion).

### Beispiel 5 (urethanmodifiziertes Polyesterharz)

In ein 10 l Reaktionsgefäß mit Rühr-, Kühl-, Heizvorrichtung und Wasserabscheider werden 509 g Erdnußfettsäure, 1 051 g Hexandiol-1,6, 560 g Cyclohexandimethanol-1,4, 1 093 g Adipinsäure, 1 243 g Isophthalsäure und 940 g Trimethylolpropan eingewogen und bei 220°C verestert, bis die Säurezahl = 5 ist.

3 540 g dieses Polyesters und 330 g Dimethylolpropionsäure werden in 700 g N-Methylpyrrolidon gelöst, mit 10 g Dibutylzinnoxid versetzt und bei 70°C mit 1 000 g Isophorondiisocyanat umgesetzt. Die Reaktion wird bei 70 bis 110°C so lange durchgeführt, bis keine NCO-Gruppen mehr nachweisbar sind. Nach Zugabe von 135 g Methyldiethanolamin wird das Harz in 5 100 g Wasser dispergiert. Man erhält eine etwa 45 %ige Harzdispersion. Der Gehalt an oranischem Lösemittel beträgt 6,5 %. Der Gehalt an reaktiven Hydroxylgruppen, die an das Polyesterharz gebunden sind, beträgt 1,77 %.

### Beispiel 6 (urethanmodifiziertes Polyesterharz)

In ein 15 l Reaktionsgefäß mit Rühr-, Kühl-, Heizvorrichtung und Wasserabscheider werden 316 g Benzoesäure, 2 316 g Trimethylolpropan, 2 853 g Hexandiol-1,6, 1 602 g Cyclohexandimethanol-1,4, 3 130 g Adipinsäure, 2 931 g Isophthalsäure und 300 g Dimerfettsäure (Pripol 1008, Unichema) eingewogen und bei 210°C verestert, bis die Säurezahl = 3 ist.

1 020 g dieses Polyesters werden zusammen mit 87 g Dimethylolpropionsäure bei 60°C in 2 000 g Aceton gelöst. Nach Zugabe von 1,5 gDibutylzinndilaurat als Katalysator werden 230 g Isophorondiisocyanat und 65 g Perhydrodiphenylmethandiisocyanat zugegeben und dere Ansatz bei 60°C so lange gerührt, bis keine freie NCO-Gruppe mehr nachweisbar ist. Nach Zugabe von 35 g Dimethylethanolamin und 1 600 g Wasser wird das Aceton destillativ entfernt. Man erhält so eine etwa 45 %ige Harzlösung, die keine organischen Lösemittel enthält. Die Lösung hat einen Gehalt an isocyanatreaktiven Hydroxylgruppen von 1 %.

### Beispiel 7 (urethanmodifiziertes Polyesterharz)

Aus 38 Teilen Hexandiol-1,6, 10,5 Teilen Trimethylolpropan und 47 Teilen Phthalsäureanhydrid stellt man durch Schmelzkondensation (Temperatur bis 210°C, bis Säurezahl 3) ein Hydroxylgruppen enthaltendes Polyesterharz her, das anschließend mit 11 Teilen Trimellithsäureanhydrid bei 120°C in 2 Stunden zur Reaktion gebracht wird. Man löst 95 Teile des Carboxylgruppen und OH-Gruppen enthaltenden Harzes in 15 Teilen Butylglykol, setzt 5 Teile Dimethylethanolamin zu und stellt mit 15 Teilen deionisiertem Wasser eine ca. 70 %ige Lösung ein.

### Beispiel 8 (erfindungsgemäßes Verwendungsbeispiel)

22,2 Teile wäßriger Polyester aus Beispiel 3 und 50,2 Teile wäßriges blockiertes Polyisocyanat aus Beispiel 2 werden in einer Perlmühle in 30 Minuten bei 2 800 U/min abgerieben und mit 15,1 Teilen Titandioxid (vom Rutiltyp), 0,1 Teilen Eisenoxid-schwarz, 4,9 Teilen Bariumsulfat, 2,1 Teilen Talkum vermischt. Man fügt noch 0,5 Teile eines Benetzungsmittels (®Additol XW 395, Vianova Hoechst, Wien, 0,5 Teile eines Antikratermittels (®Surfinol 104E, Air Product), 0,4 Teile eines Antiabsetzmittels (®Aerosil R 972, Degussa) und 3,9 Teile entionisiertes Wasse zu. Das Verhältnis von blockierten NCO-Gruppen zu organisch gebundenen Hydroxlygruppen beträgt ca. 1:1.

### Beispiel 9 (erfindungsgemäßes Verwendungsbeispiel)

Man verfährt wie in Beispiel 8 und vermischt auf einer Perlmühle folgende Bestandteile:

| | |
|---|---|
| 22,3 Teile | wäßriges Harz aus Beispiel 3 |
| 7,3 Teile | wäßriges Harz aus Beispiel 6 |
| 41,5 Teile | wäßriges blockiertes Polyisocyanat aus Beispiel 2 |
| 15,2 Teile | Titandioxid |
| 4,9 Teile | Bariumsulfat |
| 2,1 Teile | Talkum |
| 5,1 Teile | entionisiertes Wasser |
| 0,5 Teile | Additol XW 395 |
| 0,5 Teile | Surfinol 104 E |
| 0,4 Teile | Aerosil R 972 |
| 0,2 Teile | Dimethylethanolamin. |

Das Verhältnis von blockierten NCO-Gruppen zu organisch gebundenen OH-Gruppen beträgt in dem Einkomponenteneinbrennharz etwa 0,7.

### Beispiel 10 (Vergleichsversuch)

Dieses Beispiel gibt die Zusammensetzung eines optimierten Füllerbindemittels vom Stand der Technik.

Die Anreibung der Bestandteile erfolgt über eine Perlmühle in 30 Minuten bei 2 800 U/min.

Bestandteile:

| | |
|---|---|
| 33,7 Teile | wäßriges Harz aus Beispiel 7 |
| 4,3 Teile | wasserlösliches Hexamethoxymethylmelamin |
| 15,1 Teile | Titandioxid |
| 0,1 Teile | Eisenoxidschwarz |
| 4,9 Teile | Bariumsulfat |
| 2,1 Teile | Talkum |
| 38,4 Teile | entionisiertes Wasser |
| 0,5 Teile | Additol XW 395 |
| 0,5 Teile | Surfinol 104E |
| 0,4 Teile | Aerosil R 972 |

### Beispiel 11 (Vergleichsversuch)

Auch dieses Beispiel gibt ein wäßriges, optimiertes Füllerbindemittel vom Stand der Technik an, das, ebenso wie in Beispiel 10 angegeben, aus folgenden Bestandteilen hergestellt wird:

| | |
|---|---|
| 24,8 Teile | wäßriges Harz aus Beispiel 7 |
| 12,9 Teile | wäßriges Harz aus Beispiel 5 |
| 3,3 Teile | wasserlösliches Hexamethoxymethylmelamin |
| 14,3 Teile | Titandioxid |
| 0,1 Teile | Eisenoxidschwarz |
| 4,6 Teile | Bariumsulfat |
| 2,0 Teile | Talkum |
| 36,7 Teile | entionisiertes Wasser |
| 0,4 Teile | Additol XW 395 |
| 0,4 Teile | Surfinol 104E |
| 0,4 Teile | Aerosil R 972 |

### Beispiel 12 (erfindungsgemäßes, wäßriges Einkomponenteneinbrennharz)

Die folgenden Bestandteile werden wie in den vorgehenden Beispielen angegeben über eine Perlmühle durch Anreiben vermischt:

| | |
|---|---|
| 20,7 Teile | wäßriges Harz aus Beispiel 3 |
| 6,7 Teile | wäßriges Harz aus Beispiel 4 |
| 42,4 Teile | wäßriges blockiertes Polyisocyanat aus Beispiel 2 |
| 14,9 Teile | Titandioxid |
| 0,1 Teile | Eisenoxidschwarz |
| 4,8 Teile | Bariumsulfat |
| 2,1 Teile | Talkum |
| 6,7 Teile | entionisiertes Wasser |
| 0,5 Teile | Additol XW 395 |
| 0,5 Teile | Surfinol 104E |
| 0,4 Teile | Aerosil R 972 |

Das Verhältnis von blockiertem NCO zu OH beträgt ca. 0,7.

### Beispiel 13

### (Anwendung und Verarbeitung der Einkomponentenbindemittel aus den Beispielen 8, 9, 10, 11, 12 und Vergleich der Eigenschaften)

Die wäßrigen Produkte aus den Beispielen 8, 9, 10, 11 und 12 wurden mit deionisiertem Wasser auf eine Viskosität von ca. 30 s Auslaufzeit DIN-Becher 4 mm/23°C eingestellt und mit einer Fließbecherpistole mit 5 bar Luftdruck bei 65 % rel. Feuchte/23°C auf mit einer kathodisch abgeschiedenen Elektrotauchgrundierung (ca. 20 µm) beschichtete zinkphosphatierte Stahlbleche spritzappliziert.

Die Härtung der Füller erfolgte nach 10 min Ablüftung bei 23°C im Umluftofen 10 min bei 75°C und anschließend 20 min bei 165°C. Die Trockenfilmstärke betrug ca. 35 µm.

Auf die Füllerschicht wurde a) ein handelsüblicher Automobildecklack auf Basis Alkyld/Melaminharz mit einer Trockenfilmstärke von ca. 35 µm aufgebracht und 30 min bei 130°C getrocknet sowie b) ein wäßriger, farbiger Basislack mit einer Trockenfilmdicke von ca. 20 min appliziert, nach 10 min bei 80°C mit einem 2-Komponenten-PUR-Klarlack (35 µm Trockenfilm) überschichtet und zusammen ebenfalls 30 min bei 130°C eingebrannt.

Die wichtigsten, für eine Fülleranwendung entscheidenden Prüfergebnisse sind in der Tabelle 1 zusammengefaßt. Nicht angegebene Beständigkeitswerte wie z.B. Lösemittel-, Wasser- und Salzsprühfestigkeit entsprechen voll den Anforderungen der Praxis.

### Benutzte Prüfmethoden

Decklackstand
Glanz und Oberfläche des Decklackes auf den verschiedenen Füllern wurden subjektiv nach optischen Vergleichswerten in % (100 = sehr gut, 0 = sehr schlecht) bewertet.

### Steinschlagfestigkeit

### Als Prüfgeräte wurden verwendet

a) Steinschlagprüfgeräte nach VDE (Fa. Erichsen, Modell 508) mit jeweils 2 mal 500 g Stahlschrot (kantig, 4-5 mm) beschossen mit einem Luftdruck von 1,5 bar bei 23°C. Abmusterungen wurden durchgeführt bezogen auf Decklackhaftung (1-3, 1 = sehr gute Decklackhaftung, 3 = Abplatzungen zwischen Decklack und Füller) und Durchschläge bis auf das Blech (0-10) 0 = kein Durchschlag, 10 = sehr viele Durchschläge)
b) Steinschlagprüfgerät nach Mercedes-Benz Typ 490 bei 23°C und -20°C.
   Berwertungen werden durchgeführt hinsichtlich Decklackhaftung (1-3) und Durchschläge bis auf das Blech in mm².

**Tabelle 1**

| Beispiel | 10 | 11 | 8 | 9 | 12 |
|---|---|---|---|---|---|
| a) Decklack (Alkyd/Melamin) | | | | | |
| | | | | | |
| b) Decklack (2-Schicht-PUR) | | | | | |
| | | | | | |
| Decklackabstand | | | | | |
| a) | 80 % | 80 % | 80 % | 80 % | 80 % |
| b) | 90 % | 90 % | 90 % | 90 % | 90 % |
| | | | | | |
| Steinschlag VDA | | | | | |
| Durchschläge | | | | | |
| a) | 1-2 | 1 | 0 | 0 | 0 |
| b) | 2 | 2 | 0 | 0 | 0 |
| | | | | | |
| Decklackhaftung | | | | | |
| a) | 1-2 | 2 | 1 | 1 | 1 |
| b) | 2 | 2-3 | 1 | 1 | 1 |
| | | | | | |
| Steinschlag MB; 490 | | | | | |
| Durchschläge 23°C/-20°C | | | | | |
| a) | 0/1 | 0/0 | 0/0 | 0/0 | 0/0 |
| b) | 3/3 | 2/2 | 0/0 | 0/0 | 0/0 |
| | | | | | |
| Decklackhaftung 23°C/-20°C | | | | | |
| a) | 1/2 | 1/2 | 1/1 | 1/1 | 1/1 |
| b) | 2/2 | 2/2-3 | 1/1 | 1/1 | 1/1 |
| | | | | | |

| Füller auf Stahlblech | | | | | |
|---|---|---|---|---|---|
| Erichsentiefung (DIN 53 156) | 7,5 | 8 | 10 | 10 | 10 |
| | | | | | |
| Gitterschnitt (DIN 53 151 | GtO | GtO | GtO | GtO | GtO |
| | | | | | |

| Füller auf Glasplatte | | | | | |
|---|---|---|---|---|---|
| Pendelhärte (DIN 53 157 | 124 s | 87 s | 129 s | 125 s | 130 s |

### Zusammenfassung der Ergebnisse

Die Ergebnisse der Tabelle 1 zeigen, daß die Versuche 8, 9 und 12 den beiden Vergleichsversuchen 10 und 11 überlegen sind. Vor allem ist die Kombination von hoher Härte und guter Elastizität hervorzuheben. Auch die Haftung zum Decklack ist gemäß erfindungsgemäßen Beispielen bedeutend besser.

### Beispiel 14 (erfindungsgemäßes Vernetzerharz)

Analog Beispiel 2 wird ein Vernetzerharz aus folgenden Bestandteilen hergestellt:

| | |
|---|---|
| 71,5 Teile | Esterdiol aus Beispiel 1 |
| 8 Teile | Trimethylolpropan |
| 10 Teile | Dimethylolpropionsäure |
| 5,9 Teile | Hexandiol-1,6 |
| 111 Teile | Isophorondiisocyanat |
| 24,1 Teile | n-Methylpyrrolidon |
| 34,8 Teile | Butanonoxim |
| 6,7 Teile | Dimethylethanolamin (DMEA) |
| 417 Teile | entionisiertes Wasser. |

Die Umsetzung wird analog Beispiel 2 durchgeführt. Man erhält das blockierte Polyisocyanat als 35 %ige fast klare Lösung (DMAE wird zum Lösemittel gerechnet) und einer Viskosität von 9 000 mPa^{o}s/23°C. Der blockierte NCO-Gehalt liegt bei 2,0 %, die (blockierte) NCO-Funktionalität bei 2,41.

## Patentansprüche

1. Wäßriger Einbrennlack, dessen Bindemittel aus einer Kombination aus
a) in Wasser löslichen oder dispergierbaren Polyhydroxylverbindungen mit
b) in Wasser löslichen oder dispergierbaren, blockierten Polyisocyanaten
besteht, dadurch gekennzeichnet, daß
die Komponente a) im wesentlichen aus einem urethanmodifizierten Polyesterharz mit einer Säurezahl von 12 bis 30, einer Hydroxylzahl von 30 bis 130 und einem Lösungsmittelgehalt von unter 5,5 Gew.-% besteht und durch Umsetzung von
a1) 81 bis 92 Gew.-% eines Polyesterpolyols mit einer Hydroxylzahl von 80 bis 210 und einer Säurezahl ≤5,
a2) 3 bis 6,5 Gew.-% einer Bis(hydroxymethyl)-alkancarbonsäure,
a3) 0 bis 5 Gew.-% eines niedermolekularen Diols oder Triols des Molekulargewichts 62 bis 150 und
a4) 7 bis 14,5 Gew.-% einer Polyisocyanatkomponente, bestehend zu mindestens 60 % aus einem linearen, aliphatischen Polyisocyanat des Molekulargewichts 168 bis 1 000,
in mindestens 90 %iger, organischer Lösung hergestellt und nach Überführung von mindestens 75 % der Carboxylgruppen in Carboxylatgruppen in Wasser dispergiert worden ist, wobei die unter a1) genannten Polyesterpolyole Kondensationsprodukte von
a1.1) 35 bis 50 mol-% diprimären Diolen des Molekulargewichts 62 bis 150,
a1.2) 1 bis 7 mol-% primär-/sekundären Diolen des Molekulargewichts 76 bis 286,
a1.4) 4 bis 14 mol-% Triole des Molekulargewichts 92 bis 134 und
a1.5) 0 bis 4 Gew.-% Monocarbonsäuren des Molekulargewichts 122 bis 280 sind,
und die Komponente b) aus einem in Wasser löslichen oder disperbierbaren, Urethangruppen aufweisenden Polyisocyanatgemisch mit blockierten Isocyanatgruppen einer mittleren NCO-Funktionalität, bezogen auf die reversibel blockierten Isocyanatgruppen, von 2,0 bis 2,6 besteht, welches das durch zumindest teilweise Neutralisation der eingebauten Carboxylgruppen in die Salzform überführte Umsetzungsprodukt aus
(i) einer Diisocyanat-Komponente bestehend aus mindestens einem organischen Diisocyanat des Molekulargewichtsbereichs 168 bis 300 mit
(ii) einem monofunktionellen Blockierungsmittel für Isocyanatgruppen,
(iii) einer Hydroxycarbonsäure-Komponente, bestehend aus mindestens einer ein- oder zweibasischen Hydroxycarbonsäure,
(iv) 1 bis 15 Gew.-%, bezogen auf das Gewicht der Komponente (i) einer Polyolkomponente, bestehend aus mindestens einem 2- bis 6-wertigen Alkohol des Molekulargewichtsbereichs 62 bis 182 und
(v) 50 bis 500 Gew.-%, bezogen auf das Gewicht der Komponente (i), einer Polyesterdiol-Komponente, bestehend aus mindestens einem Estergruppen enthaltenden Diol des Molekulargewichtsbereichs 350 bis 950
darstellt.

## Claims

1. Aqueous stoving lacquer, the binder of which consists of a combination of
a) polyhydroxyl compounds soluble or dispersible in water with
b) blocked polyisocyanates soluble or dispersible in water,
characterised in that
component a) substantially consists of a urethane-modified polyester resin having an acid value of 12 to 30, a hydroxyl value of 30 to 130 and a solvent content of below 5.5 wt.% and is produced by the reaction of
a1) 81 to 92 wt.% of a polyester polyol having a hydroxyl value of 80 to 210 and an acid value of ≤ 5,
a2) 3 to 6.5 wt.% of a bis(hydroxymethyl)alkanecarboxylic acid,
a3) 0 to 5 wt.% of a low molecular weight diol or triol of a molecular weight of 62 to 150 and
a4) to 14.5 wt.% of a polyisocyanate component, at least 60% of which consists of a linear aliphatic polyisocyanate of a molecular weight of 168 to 1000,
in an at least 90% organic solution and, once at least 75% of the carboxyl groups have been converted into carboxylate groups, is dispersed in water, wherein the polyester polyols stated under a1) are condensation products of
al.1) 35 to 50 mol% of diprimary diols of a molecular weight of 62 to 150,
a1.2) 1 to 7 mole of primary/secondary diols of a molecular weight of 76 to 286,
a1.4) 4 to 14 mol% of triols of a molecular weight of 92 to 134 and
a1.5) 0 to 4 wt.% of monocarboxylic acids of a molecular weight of 122 to 280
and component b) consists of a polyisocyanate mixture, soluble or dispersible in water, containing urethane groups and blocked isocyanate groups and of an average NCO-functionality, relative to the reversibly blocked isocyanate groups, of 2.0 to 2.6, which is substantially the reaction product, converted into the salt form by at least partial neutralisation of the incorporated carboxyl groups, of
(i) a diisocyanate component consisting of at least one organic diisocyanate of the molecular weight range from 168 to 300 with
(ii) a monofunctional blocking agent for isocyanate groups,
(iii) a hydroxycarboxylic acid component consisting of at least one monobasic or dibasic hydroxycarboxylic acid,
(iv) 1 to 15 wt.%, relative to the weight of component (i), of a polyol component, consisting of at least one dihydric to hexahydric alcohol of the molecular weight range from 62 to 182 and
(v) 50 to 500 wt.%, relative to the weight of component (i), of a polyester diol component consisting of at least one diol containing ester groups and of the molecular weight range from 350 to 950.

## Revendications

1. Vernis aqueux à cuire au four dont le liant consiste en une combinaison de
a) des composés polyhydroxylés solubles ou dispersables dans l'eau et
b) des polyisocyanates bloqués solubles ou dispersables dans l'eau,
caractérisé en ce que
le composant a) consiste essentiellement en une résine de polyester à modification uréthane d'indice d'acide 12 à 30, d'indice d'hydroxyle 30 à 130 et à une teneur en solvant inférieure à 5,5 % en poids, qui a été préparée par réaction de
a1) 81 à 92 % en poids d'un polyesterpolyol d'indice d'hydroxyle 80 à 210 et d'indice d'acide ≤ 5,
a2)3 à 6,5% en poids d'un acide bis(hydroxyméthyl)alcanecarboxylique,
a3) 0 à 5 % en poids d'un diol ou triol à bas poids moléculaire, poids moléculaire 62 à 150 et
a4) 7 à 14,5 % en poids d'un composant polyisocyanate consistant pour au moins 60 % en un polyisocyanate aliphatique linéaire de poids moléculaire 168 à 1 000,
en solution organique à au moins 90 %, et qui, après conversion d'au moins 75 % des groupes carboxyles en groupes carboxylates, a été dispersée dans l'eau, les polyesterpolyols mentionnés sous a1) sont des produits de condensation de
a1.1) 35 à 50 mol % de diols diprimaires de poids moléculaire 62 à 150,
a1.2) 1 à 7 mol % de diols primaires/secondaires de poids moléculaire 76 à 286,
a1.4) 4 à 14 mol % de triols de poids moléculaire 92 à 134 et
a1.5) 0 à 4 % en poids d'acides monocarboxyliques de poids moléculaire 122 à 280,
et le composant b) consiste en un mélange de polyisocyanates à groupes uréthanes, mais dont les groupes isocyanates sont bloquées, qui est soluble ou dispersable dans l'eau, avec une fonctionnalité moyenne en groupes NCO, concernant les groupes isocyanates bloqués de manière réversible, de 2,0 à 2,6, qui est le produit de réaction, mis sous la forme sel par neutralisation au moins partielle des groupes carboxyles, de
(i) un composant diisocyanate consistant en au moins un diisocyanate organique de poids moléculaire 168 à 300, avec
(ii) un agent bloquant monofonctionnel des groupes isocyanates,
(iii) un composant acide hydroxycarboxylique consistant en au moins un acide hydroxycarboxylique mono- ou dibasique,
(iv) 1 à 15 % en poids, par rapport au poids du composant (i), d'un composant polyol consistant en au moins un alcool di- à hexavalent de poids moléculaire 62 à 182 et
(v) 50 à 500 % en poids, par rapport au poids du composant (i), d'un composant polyesterdiol consistant en au moins un diol à groupes esters, de poids moléculaire 350 à 950.
